# EUROPEAN PATENT APPLICATION

(11) **EP 4 564 737 A1**
(43) Date of publication of application: **04.06.2025**
(21) Application number: 23213101.1
(22) Date of filing: 29.11.2023
(51) Int. Cl.: H04L 9/32, G06F 9/38

(54) **MEASURES ALLOWING ACCELERATION IN THE EXECUTION OF CRYPTOGRAPHIC ALGORITHMS THAT HAVE A PRIORI INDETERMINABLE PROCESSING TIME AND APPLICATIONS THEREOF**

(71) Applicant: Airbus S.A.S., 31700 Blagnac (FR)
(72) Inventor: Klügel, Markus, 85521 Taufkirchen (DE)
(74) Representative: OTN Airbus SAS

(57) **Abstract**

In order to improve the performance of post-quantum safe signature generation, preferably for a high number of requests and/or real-time communication the invention proposes a method for pipelining data processing, where at least one data processing step takes an a priori indeterminable amount of processing time. The method involves generating a unique ID (UID) and associating that UID with the input data (32); feeding the input data (32) and the UID to a pipeline module (52) that includes a data processing module (40, 44) and a processing delay module (54); delaying outputting the UID by the processing delay module (54) for a delay time that corresponds to an amount of processing time required by the data processing module (40, 44) for a single iteration, wherein, in response to the branching part (44) determining that the condition is one of met or not met, the pipeline module (52) re-inputs the UID into the processing delay module (54), wherein, in response to the branching part (44) determining that the condition is the other one of met or not met, the processing delay module (54) outputs the UID thereby unblocking the transmission of further input data (32) to the processing module (40, 44), and the processing module (40, 44) outputs processed data (48) as output data.

## Description

The invention relates to a computer-implemented and/or hardware implemented method for pipelining data processing of input data to be processed.

Reference is made to Ducas, L., Kiltz, E., Lepoint, T., Lyubashevsky, V., Schwabe, P., Seiler, G., & Stehlé, D. (2018). CRYSTALS-Dilithium: A Lattice-Based Digital Signature Scheme. IACR Transactions on Cryptographic Hardware and Embedded Systems, 2018(1), 238-268. https://doi.org/10.13154/tches.v2018.i1.238-268.

The fields of multicore processing, hardware acceleration and hardware-software codesign are generally known. Multicore processing generally considers the task of distributing computational tasks on multiple cores. The key questions are typically when and on which core to start a computing thread, task or subtask, such that a specific utility (e.g. the overall computation time, energy) is improved.

Hardware acceleration typically deals with the design of specialized hardware that realizes a sub-function required to execute a specific task. The typical goals are to identify the functions that would benefit most from hardware acceleration and to implement and integrate them efficiently into the overall computing architecture.

It is the object of the invention to improve the performance of post-quantum safe signature generation, preferably for a high number of requests and/or real-time communication.

The invention provides a computer-implemented and/or hardware implemented method for pipelining data processing of input data to be processed, where at least one data processing step takes an a priori indeterminable amount of processing time and includes a performance part that executes a single iteration of processing on the input data and a branching part that determines whether a condition is met, the method comprising:
- generating a unique ID (UID) and associating that UID with the input data;
- feeding the input data and the UID to a pipeline module that includes a data processing module and a processing delay module;
- delaying outputting the UID by the processing delay module for a delay time that corresponds to an amount of processing time required by the data processing module for the single iteration of the performance part,
- wherein, in response to receiving the UID, the processing delay module blocks transmission of further input data to the processing module for as long as the UID is not output from the processing delay module,
- wherein, in response to receiving the input data, the data processing module executes the performance part and the branching part,
- wherein, in response to the branching part determining that the condition is one of met or not met, the pipeline module re-inputs the UID into the processing delay module,
- wherein, in response to the branching part determining that the condition is the other one of met or not met, the processing delay module outputs the UID thereby unblocking the transmission of further input data to the processing module, and the processing module outputs processed data as output data.

Preferably, the pipeline module includes a data preprocessing module configured for executing a preprocessing step that has an a priori known processing time and a preprocessing delay module. Preferably, the method comprises feeding the input data to the data preprocessing module and the UID to the preprocessing delay module. Preferably, the method comprises delaying outputting the UID by the preprocessing delay module for a delay time that corresponds to the a priori known processing time. Preferably, in response to receiving the UID, the preprocessing delay module blocks transmission of further input data to the data preprocessing module for as long as the UID is not output from the preprocessing delay module. Preferably, in response to receiving the input data, the data preprocessing module executes a preprocessing step to generate preprocessed data. Preferably, the UID and the preprocessed data are output as the UID and the input data for the processing delay module and processing module, respectively.

Preferably, the pipeline module includes a finalization module configured for executing a finalization step that has an a priori known processing time and a finalization delay module. Preferably, the method comprises feeding the output of the data processing module to the finalization module and the UID output from the processing delay module to the finalization delay module. Preferably, delaying outputting the UID by the finalization delay module for a delay time that corresponds to the a priori known processing time. Preferably, in response to receiving the UID, the finalization delay module blocks the receipt of further data from the data processing module for as long as the UID is not output from the finalization delay module. Preferably, in response to receiving the output from the data processing module, the finalization module executes a finalization step to generate finalized data. Preferably, the UID and the finalized data are output as a final output of the pipeline module.

Preferably, the data processing involves signing an unsigned message with a post-quantum cryptographic signing method, where at least one step of the signing method takes an a priori indeterminable amount of processing time and includes a hashing part that executes a single iteration of hashing on the unsigned message as the performance part. Preferably, the input data is the unsigned message. Preferably, the pipeline module is a cryptographic pipeline module that includes a hashing module as the processing module and a hashing delay module as the processing delay module.

Preferably, the cryptographic pipeline module includes the preprocessing module.

Preferably, the cryptographic pipeline module includes the finalization module configured for executing a finalization step that has an a priori known processing time and a finalization delay module.

The invention provides a computer-implemented and/or hardware implemented method for signing an unsigned message to be signed with a post-quantum cryptographic signing method, where at least one step of the signing method takes an a priori indeterminable amount of processing time and includes a hashing part that executes a single iteration of hashing on the unsigned message data and a branching part that determines whether a condition is met, the method comprising:
- generating a unique ID (UID) and associating that UID with the unsigned message;
- feeding the unsigned message to be processed and the UID to a cryptographic pipeline module that includes a hashing module and a hashing delay module;
- delaying outputting the UID by the hashing delay module for a delay time that corresponds to an amount of processing time required by the hashing module for the single iteration of the hashing part,
- wherein, in response to receiving the UID, the hashing delay module blocks transmission of a further unsigned message to the hashing module for as long as the UID is not output from the hashing delay module,
- wherein, in response to receiving the unsigned message, the hashing module executes the hashing part and the branching part,
- wherein, in response to the branching part determining that the condition is one of met or not met, the cryptographic pipeline module re-inputs the UID into the hashing delay module,
- wherein, in response to the branching part determining that the condition is the other one of met or not met, the hashing module outputs the UID thereby unblocking the transmission of the further unsigned message to the hashing module, and the hashing module outputs a hash value as output data.

Preferably, the cryptographic pipeline module includes a preprocessing module configured for executing a preprocessing step that has an a priori known processing time and a preprocessing delay module. Preferably, the method comprises feeding the unsigned message to the preprocessing module and the UID to the preprocessing delay module. Preferably, the method comprises delaying outputting the UID by the preprocessing delay module for a delay time that corresponds to the a priori known processing time. Preferably, in response to receiving the UID, the preprocessing delay module blocks transmission of a further unsigned message to the data preprocessing module for as long as the UID is not output from the preprocessing delay module. Preferably, in response to receiving the unsigned message data, the data preprocessing module executes a preprocessing step to generate a preprocessed unsigned message. Preferably, the UID and the preprocessed unsigned message are output as the UID and input for the hashing delay module and hash module, respectively.

Preferably, the cryptographic pipeline module includes a finalization module configured for executing a finalization step that has an a priori known processing time and a finalization delay module. Preferably, the method comprises feeding the output of the hashing module to the finalization module and the UID output from the hashing delay module to the finalization delay module. Preferably, the method comprises delaying outputting the UID by the finalization delay module for a delay time that corresponds to the a priori known processing time. Preferably, in response to receiving the UID, the finalization delay module blocks the receipt of further input from the hashing module for as long as the UID is not output from the finalization delay module. Preferably, in response to receiving the output from the hashing module, the finalization module executes a finalization step to generate a signature. Preferably, the UID and the signature are output as a final output of the cryptographic pipeline module.

Preferably, the cryptographic pipeline module is partially or fully hardware-implemented as a CPU extension or hardware accelerator module that is connectable to a general purpose computer.

Preferably, the data processing module and the processing delay module, and/or the finalization module and the finalization delay module are fully hardware-implemented.

The invention provides a pipeline module that is configured as a CPU extension or a hardware acceleration module that is connectable to a general purpose computer, wherein the pipeline module is configured to partially or fully perform the preferred method.

The invention provides a general purpose computer comprising a CPU, a non-volatile data storage that is operatively coupled to the CPU and that is capable of storing instructions for the CPU, a volatile memory that is operatively coupled to the CPU for random access, and a preferred pipeline module that is operatively coupled at least to the CPU.

The invention provides a communication module, preferably for an aerial vehicle, comprising a preferred pipeline module and/or a preferred general purpose computer, the communication module further comprising a transmitter and/or a transceiver that is operatively coupled to the pipeline module or the general purpose computer such that an unsigned message passes through the pipeline module for signing and the signed message is transmitted by the transmitter or transceiver.

The invention provides an aerial vehicle or a ground station having a preferred communication module.

The invention provides a system comprising at least one aerial vehicle, a server and a database, wherein the aerial vehicle and the server are configured to communicate with each other via signed messages by means of a preferred communication module, wherein the server has stored thereon a whitelist of valid signatures, wherein the server is configured to accept signed messages whose signature is part of the whitelist, wherein the server is configured to reject unsigned messages and/or signed messages whose signature is not on the whitelist or on a blacklist.

The invention provides a non-volatile computer readable data carrier or a data carrier signal comprising instructions, which, when executed by a general purpose computer cause it to carry out the preferred method.

The invention provides a non-volatile computer readable data carrier or data carrier signal comprising instructions which, when synthesized into a field programmable gate array, cause the field programmable gate array to function as a preferred pipeline module.

The idea is a pipelined implementation of post-quantum safe signature generation methods, such as DILITHIUM from the CRYSTALS suite. The general application is mainly targeted to the field of "post-quantum" (i.e., quantum safe) cryptography, but can as well be extended to other cryptography or also other, similarly structured programs. As such, the ideas presented herein are related to the field of hardware-software codesign and hardware acceleration. The ideas can be applied to products that include hardware acceleration for cryptographic functions.

As a typical application, the cryptographic function is used in the electronic bay of an aircraft or in the cloud of a ground station counterpart. It can be implemented, e.g., in the SkyWise platform. Skywise is an aircraft data analytics platform that can combine in-flight, engineering and operational data to address aircraft operations challenges, e.g., predictive maintenance or (structural) health monitoring.

This disclosure assumes a scenario in which a computer has a dedicated computing unit, i.e., an extension to a central processing unit (CPU) or a field-programmable gate array (FPGA), that can realize a signature generation according to the CRYSTALS DILITHIUM method. It is assumed that the computer receives a high number of requests to execute these functions. Each request can be passed to the dedicated unit, which then executes the signature generation.

The dedicated unit has a multi-stage structure that allows for pipelining, i.e., the injection of a new request into the dedicated unit before the previous request has been finished. This allows for a higher throughput of requests compared to simply executing on a general purpose computer. Pipelining structures typically depend on the deterministic behavior of related sub-functions, which allow collision-free management of different commands in the pipe. However, the DILITHIUM scheme contains a loop that needs to be re-run if its result does not satisfy a specific condition.

This is the key issue for pipelining. Due to the number of required loops being indeterminate beforehand, i.e. being inherently random, a typical pipelining approach is unsuitable. The method disclosed herein proposes a way to achieve pipelining in view of these issues.

Compared to traditional multicore processors, hardware acceleration by means of CPU extensions or FPGAs can have advantages, such as significantly improving performance and energy consumption for specific tasks.

Pipelining structures are a way to further optimize the utilization of such accelerators. One advantage of the disclosure compared to the known approach is to implement a pipelining structure for the execution of a task with a component that needs to be run for a random number of times, where the exact number of times the task needs to be run cannot be known beforehand.

Communication links are increasingly becoming an integral part of aeronautic systems. An example that is implemented or envisioned in multiple contexts (commercial airspace as well as urban airspace) is the data upload to some cloud. Multiple aircraft, or in general air vehicles (AVs), may upload telemetry or status updates to a cloud server. On this server, data can be processed, fetched by end users and/or re-distributed to the AVs. In order to avoid misuse, the communication links need to be secured cryptographically, to provide confidentiality, integrity and/or authentication. To do so, a public key infrastructure (PKI) based on asymmetric cryptography is often used.

PKls involve different procedures for key exchange and signature generation/verification. These procedures require the execution of computational tasks that may run on general purpose CPUs or on specific hardware, such as FPGAs or specific CPU extensions. In some places, for example in the cloud, cryptographic functions such as signature generation may need to be executed a high number of times. In order to deal with this load efficiently, a pipelined hardware accelerator setup is targeted.

The disclosed measures are tailored for the implementation of the CRYSTALS DILITHIUM signature generation method. However, the same may also be applied to other quantum safe signature generation methods, such as SABER, or other, similarly structured algorithm implementations. In general the ideas presented herein are applicable to cryptographic algorithms that have loops with an indeterminate (basically a random) amount or re-runs.

DILITHIUM, which is part of the CRYSTALS suite, is a lattice-based signature generation scheme that targets quantum safe signature generation, i.e., generation of signatures that cannot be broken using Shor's algorithm on a quantum computer.

As described in [1] the creation of a signature for a message M can be roughly grouped into four steps, preprocessing, hashing, condition checking and finalizing. The execution of the hashing step needs to be repeated a certain number of times. How often exactly can only be seen in the retrospective, as the condition checking is evaluated only after their execution. This repetition creates a challenge when a pipelined implementation structure is targeted, because pipelining typically uses the property that data execution happens within a previously known number of clock cycles, and that commands injected in a specific order are processed in that order. Thus, when simply pipelining the known DILITHIUM scheme, due to each request for a signature generation taking a different amount of time it is possible for one command to "overtake" another one, e.g., if the first command does not meet the branching condition but the second command does. Finally, there is a possibility that a signature for which the hashing steps need to be re-executed might collide with another signature that just finished preprocessing.

To solve these issues, the invention proposes an implementation structure, where each message to be signed is associated with a unique ID (UID), that is passed to the hardware when the message is injected. In some embodiments the hardware implements delay lines. Each delay line can take one UID as input at each cycle, and can output this UID after the number of cycles corresponding to its delay. In some embodiments a delay line may be halted for one cycle, in which case it does not take an input nor ejects its output. The delay lines are chosen to match the time, i.e., clock cycles, required to execute the preprocessing step, the hashing and condition checking steps, and the finalization step.

Between the different delay lines, there can be a branching logic that is preferably controlled by the condition checking step, or rather its result. If the condition checking step result in the determination that the condition is not met, the ID that is output at the corresponding hashing delay line is re-injected into it, while the preprocessing delay line pauses its operation for one cycle.

If the condition is met, all delay lines are connected in a line and the output from the preprocessing delay line is injected into the hashing delay line, while the output of the hashing delay line is injected into the finalization delay line.

In some embodiments the output of the finalization delay line is merged with the signature output.

In some embodiments the counterpart on the processor can then take the ID and can associate the signature S with its corresponding message M.

In some embodiments the preprocessing step is done in software. In this case, instead of transferring a full, long message to the hardware accelerator, only its hash H needs to be transferred, which can reduce the risk of a bottleneck by the accelerator.

While described herein with reference to the DILITHIUM scheme, the ideas presented herein can also be applied to different, more complex branching algorithms, for example an implementation of the SABER signature algorithm. The key innovation is to apply the described "ID delay line" structure in parallel to the cryptographic algorithm implementation, wherein the delay lines are controlled by the respective branching conditions of the respective cryptographic algorithm.

Embodiments of the invention are described in more detail with reference to the accompanying schematic drawings that are listed below
Fig. 1 depicts an embodiment of a system for data processing;
Fig. 2 depicts a variant of the system of Fig. 2;
Fig. 3 depicts an embodiment of the DILITHIUM scheme according to the prior art;
Fig. 4 depicts an embodiment of a pipelined DILITHIUM scheme according to the invention;
Fig. 5 depicts a variant of the scheme according to Fig. 4.

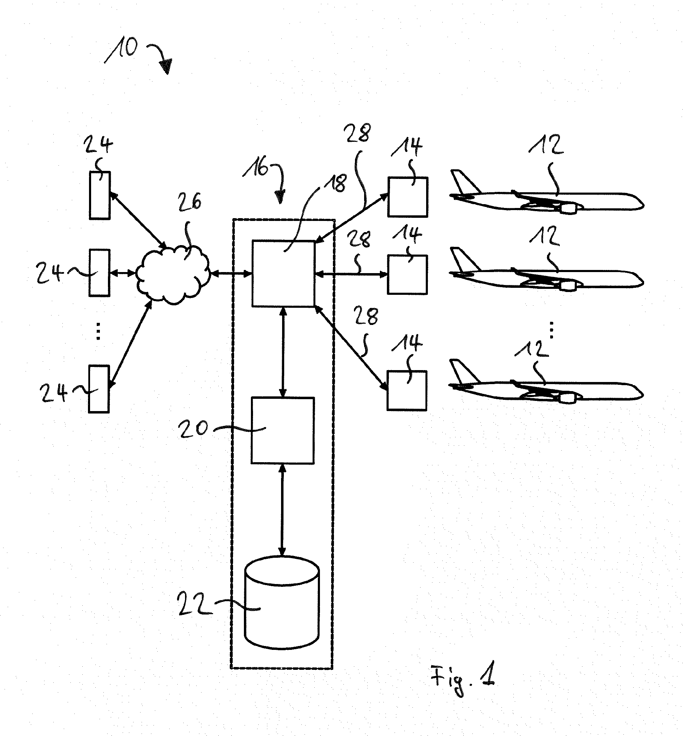

Referring to Fig. 1 a system 10 for data processing. The system 10 includes a plurality of aerial vehicles 12, such as (passenger) airplanes, unmanned aerial vehicles (UAVs) and/or vehicles for urban air mobility (UAMs). Each aerial vehicle 12 is equipped with a communication module 14.

The system 10 includes a ground station 16. The ground station 16 further includes a ground communication module 18, a server 20 and a database 22.

The system 10 caters to a plurality of end users 24. The end users 24 are typically involved in operating, maintaining or manufacturing the aerial vehicles 12. The end users 24 can communicate with the database 22 via internet 26 or any other suitable communications network. The connection from the end users 24 to the database 22, in particular the connection to the ground communication module 18 is cryptographically secured to prevent access of third-parties.

Each aerial vehicle 12 has a plurality of sensors that measure data of various type that are indicative of the state that the aerial vehicle 12 is in. For example, there can be sensors that measure weather data around the aerial vehicle 12, e.g. temperature, barometric pressure, humidity. Other sensors can measure wind shear, air speed and other data relevant to the flight trajectory or other flight relevant data. Furthermore, the aerial vehicle 12 can have sensors or measurement units, which are configured to detect wear or maintenance requirements of cabin equipment, hydraulical or electrical drive systems, etc.

These different types of measurement data can be transmitted from the aerial vehicle 12 from the communication module 14 via a communication link 28 to the ground communication module 18. The communication link 28 between the aerial vehicle 12 and the ground station 16 should be secured against tampering. The messages transmitted via the communication link 28 are provided with a cryptographic signature that allows authentication at the receiving end. As the amount of messages that needs to be signed can be large - given the fact that the aerial vehicle 12 has lots of sensors - the signing process is done efficiently in a pipelined manner (described in more detail below).

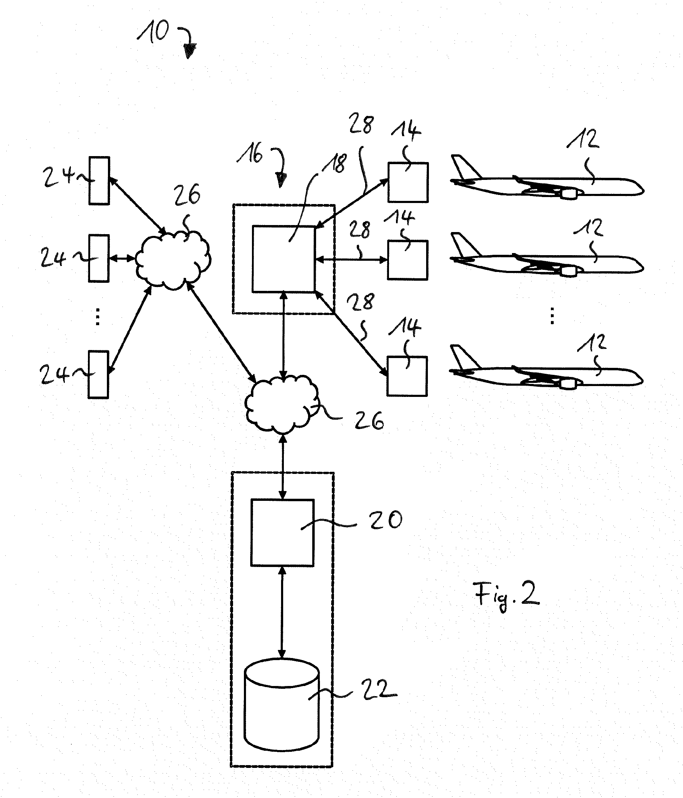

Referring to Fig. 2, a variant of the system 10 has the ground station 16 separate from a datacenter 30, which includes the server 20 and the database 22. The ground station 16 is connected to the datacenter 30 via the internet 26 using a cryptographically secured connection. In this variant, the end users 24 connect via the internet to the datacenter 30 instead of the ground station 16. In other words, the end users 24 do not have a connection to the ground station 16, but only to the datacenter 30 to access the data received from the aerial vehicle 12.

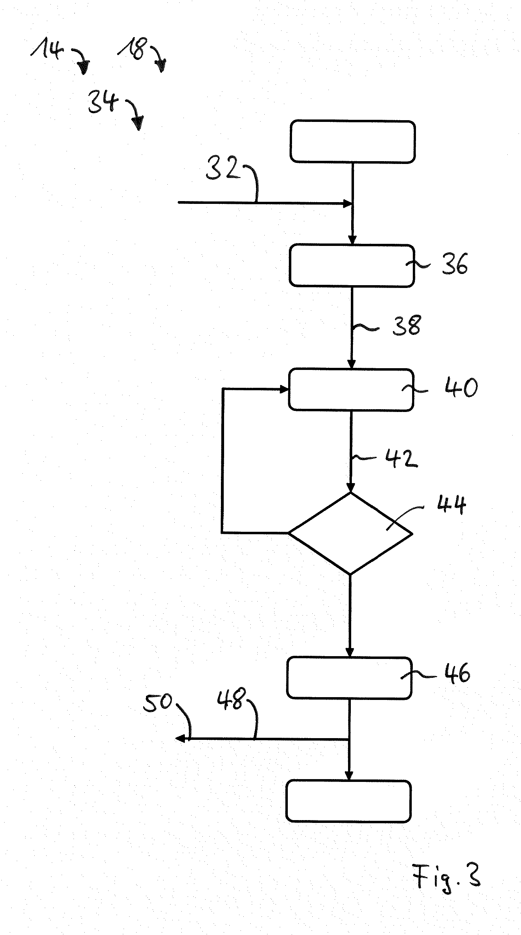

Referring to Fig. 3, the DILITHIUM scheme as relevant for this invention is described. For a detailed description, reference is made to [1], which is incorporated for the purposes of disclosure.

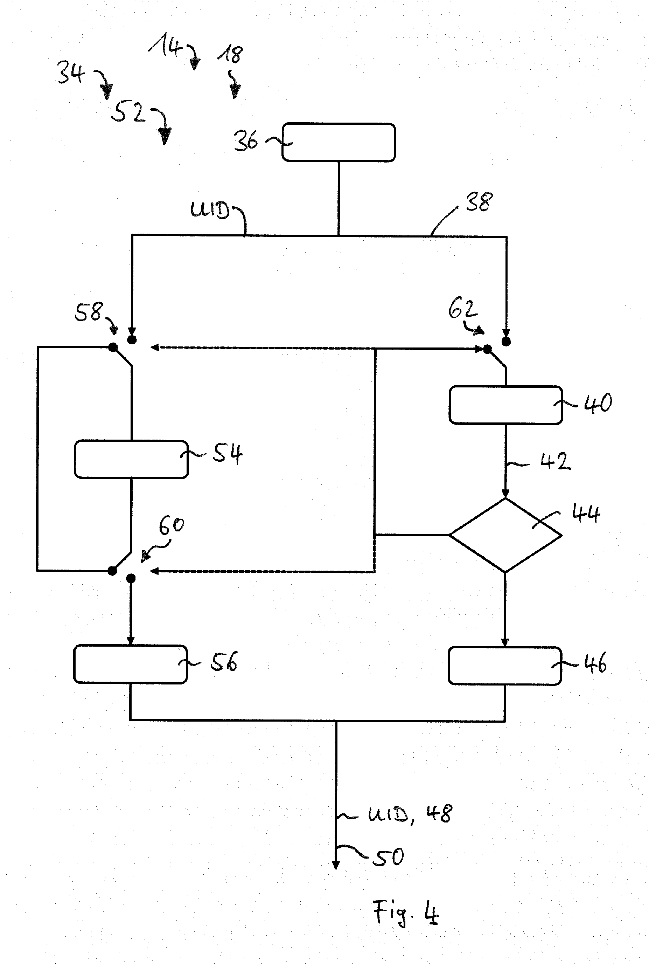

An unsigned message 32 is fed to a cryptographic module 34. The cryptographic module 34 is generally configured to perform the sign function disclosed in [1], page. 246, figure 4, lines 09 to 24, and the associated text passages.

The cryptographic module 34 comprises a preprocessing module 36. The preprocessing module 36 is configured to perform the lines 09 to 11 of the sign function on the unsigned message 32 thereby generating a preprocessed unsigned message 38.

The cryptographic module 34 comprises a hashing module 40 that is fed with the preprocessed unsigned message 38. The hashing module 40 is configured to perform the lines 13 to 18 of the sign function. The hashing module 40 outputs a hash value 42 that is based on the preprocessed unsigned message 38.

The cryptographic module 34 comprises a branching module 44 that is configured to perform line 19 of the sign function, which checks whether a certain condition is met. If the condition is not met, the preprocessed unsigned message 38 and the hash value 42 are fed back to the hashing module 40 for another iteration. The DILITHIUM scheme is designed such that is not possible to predict how many iterations are required until the condition is met beforehand.

If the condition is met, the hash value 42 and the preprocessed unsigned message 38 are fed to a finalization module 46 of the cryptographic module 34, wherein the finalization module 46 is configured to perform the lines 21 to 22 of the sign function. The finalization module 46 outputs a signature 48 of the preprocessed unsigned message 38, and the cryptographic module 34 generates a signed message 50 from the preprocessed unsigned message 38 and the signature 48.

The cryptographic module 34 is part of the communication module 14, which transmits the signed message 50 to the ground communication module 18. The ground communication module 18 comprises its own ground cryptographic module that is configured to verify the signature according to the steps 25 to 28 as disclosed in [1], page 246, figure 4 and the associated disclosure.

Referring to Fig. 4, the cryptographic module 34 includes a cryptographic pipeline module 52. The cryptographic pipeline module 52 is hardware implemented by a field programmable gate array (FPGA). The cryptographic pipeline module 52 is configured as a hardware accessory that interfaces with a general purpose computer via a known interface, such as PCI, PCI-e.

The cryptographic pipeline module 52 includes the previously described hashing module 40, the branching module 44 and the finalization module 46. In this embodiment the preprocessing module 36 is software implemented.

Furthermore, the cryptographic pipeline module 52 includes a hashing delay module 54 and a finalization delay module 56. The hashing delay module 54 is configured for receiving a unique ID (UID) and for outputting the UID after a predetermined amount of time tₕ, e.g., clock cycles, that corresponds to the amount of time needed by the hashing module 40 to perform the hashing step and the branching module 44 to perform the check, whether the condition is met.

The hashing delay module 54 is connected to an input switch 58 and an output switch 60. The input switch 58 controls, whether the hashing delay module 54 receives data, specifically the UID, from the preprocessing module 36 or from itself. The output switch 60 controls, whether the output of the hashing delay module 54 is sent back to itself or the finalization delay module 56.

The hashing module 40 is connected to an input switch 62 that controls, whether the hashing module 40 receives input from itself or the preprocessing module 36.

An embodiment of the pipelined signing process is now described with reference to Fig. 4. The unsigned message 32 is preprocessed by the preprocessing module 36. The preprocessing module 36 generates the preprocessed unsigned message 38 (typically a hash of the unsigned message 32 and not the message itself) and also a UID that is associated with the preprocessed unsigned message 32. The UID can be generated using a counter or other suitable generation method.

The UID is fed to the hashing delay module 54 and the preprocessed unsigned message 38 is fed to the hashing module 40. In response to receiving the UID, the hashing delay module 54 is blocked from receiving another UID, and if this is attempted, the hashing delay module 54 can sends back a corresponding error message to the preprocessing module 36.

In response to receiving the preprocessed unsigned message 38, the hashing module 40 carries out the hashing steps to generate the hash value 42. The branching module 44 then checks based on the hash value 42 and optionally any other output of the hashing module 40, whether the condition is met.

If the condition is not met, the input and output switches 58, 60, 62 are controlled such that the hashing module 40 and the hashing delay module 54 receive their own respective outputs. With this, the hashing delay module 54 is again blocked and can reject receipt of another preprocessed unsinged message 38. In other words, the hashing delay module 54 signals that the cryptographic pipeline module 52 is busy and cannot currently accept new preprocessed unsigned messages 38 for signing.

If the condition is met, the input switches 58, 62 are controlled such that the hashing module 40 and the hashing delay module 54 are able to receive new input from the preprocessing module 36. Furthermore, the output switch 60 is controlled such that the hashing delay module 54 can feed the UID to the finalization delay module 56, and the branching module 44 feeds the hash value 42 resulting from the last iteration to the finalization module 46.

The finalization module 46 generates the signature 48 and the finalization delay module 56 delays output of the UID for a corresponding amount of finalization time tf. The cryptographic pipeline module 52 outputs the UID and the signature 48, and the cryptographic module 34 generates the signed message 50 from the unsinged message 32, the signature 48, and optionally the UID.

With this implementation, the hashing module 40 can be supplied with the next preprocessed unsigned message 38 as soon as the hashing steps have concluded and the condition was met. Thus, the signing process has a pipeline structure and the rate at which unsigned messages 32 can be cryptographically signed can be increased.

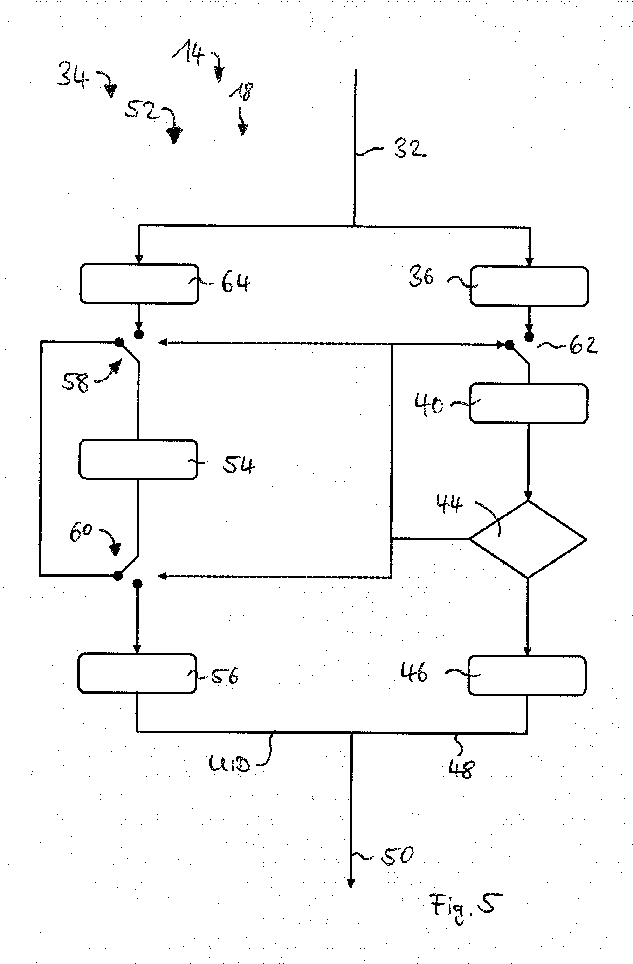

Referring to Fig. 5, another embodiment of the cryptographic module 34 is described insofar as it differs from the previously described embodiment. In this embodiment, the cryptographic pipeline module 52 additionally includes the previously described preprocessing module 36. In other words, in this embodiment the preprocessing module 36 is also hardware implemented similar to the other modules.

Furthermore, the cryptographic pipeline module 52 includes in addition a preprocessing delay module 64. The preprocessing delay module 64 is configured to receive the UID and for outputting the UID after a predetermined amount of time tₚ, e.g., clock cycles, that corresponds to the amount of time needed by the preprocessing module 36 to perform the preprocessing step. The preprocessing delay module 64 is connected to the input switch 58. The preprocessing module 36 is connected to the input switch 62.

Another embodiment of the pipelined signing process is now described with reference to Fig. 5. The unsigned message 32 and the associated UID are fed to the cryptographic pipeline module 52. The UID is fed to the preprocessing delay module 64 and the unsigned message 32 is preprocessed by the preprocessing module 36. The preprocessing module 36 generates the preprocessed unsigned message 38 (typically a hash of the unsigned message 32).

In response to receiving the unsigned message 32, the preprocessing module 36 carries out the preprocessing steps to generate the preprocessed unsigned message 38.

The UID is fed to the preprocessing delay module 64. In response to receiving the UID, the preprocessing delay module 64 is blocked from receiving another UID, and if this is attempted, the preprocessing delay module 64 can send a corresponding error message.

After the time tₚ has elapsed, the preprocessing delay module 36 and the preprocessing delay module 64 pass on the preprocessed unsinged message 38 and the UID, respectively, to the hashing module 40 and the hashing delay module 54. The hashing module 40 and the hashing delay module 54 perform as previously described.

If the condition is not met, the input and output switches 58, 60, 62 are controlled such that the hashing module 40 and the hashing delay module 54 receive their own respective outputs. The hashing delay module 54 in addition causes the preprocessing delay module 64 to delay for another amount of time tₚ, and the preprocessing delay module 64 causes the preprocessing module 36 to wait correspondingly before feeding the preprocessed unsigned message 38 to the hashing module 40 again after the time tₚ. The operation of the remaining process is identical to the embodiment of Fig. 4.

### List of reference signs:

- 10: system
- 12: aerial vehicle
- 14: communication module
- 16: ground station
- 18: ground communication module
- 20: server
- 22: database
- 24: end user
- 26: internet
- 28: communication link
- 30: datacenter
- 32: unsigned message
- 34: cryptographic module
- 36: preprocessing module
- 38: preprocessed unsigned message
- 40: hashing module
- 42: hash value
- 44: branching module
- 46: finalization module
- 48: signature
- 50: signed message
- 52: cryptographic pipeline module
- 54: hashing delay module
- 56: finalization delay module
- 58: input switch
- 60: output switch
- 62: input switch
- 64: preprocessing delay module

## Claims

1. A computer-implemented and/or hardware implemented method for pipelining data processing of input data (32, 38, 42) to be processed, where at least one data processing step takes an a priori indeterminable amount of processing time and includes a performance part (40) that executes a single iteration of processing on the input data (32, 38, 42) and a branching part (44) that determines whether a condition is met, the method comprising:
- generating a unique ID (UID) and associating that UID with the input data (32);
- feeding the input data (32) and the UID to a pipeline module (52) that includes a data processing module (36, 40, 44, 46) and a processing delay module (54, 56, 64);
- delaying outputting the UID by the processing delay module (54, 56, 64) for a delay time that corresponds to an amount of processing time required by the data processing module (36, 40, 44, 46) for the single iteration of the performance part,
- wherein, in response to receiving the UID, the processing delay module (54, 56, 64) blocks transmission of further input data (32, 38, 42) to the data processing module (36, 40 44, 46) for as long as the UID is not output from the processing delay module (54, 56, 64),
- wherein, in response to receiving the input data (32), the data processing module (36, 40, 44, 46) executes the performance part and the branching part,
- wherein, in response to the branching part (44) determining that the condition is one of met or not met, the pipeline module (52) re-inputs the UID into the processing delay module (54, 56, 64),
- wherein, in response to the branching part (44) determining that the condition is the other one of met or not met, the processing delay module (54, 56, 64) outputs the UID thereby unblocking the transmission of further input data (32) to the processing module (36, 40, 44, 46), and the processing module (36, 40, 44, 46) outputs processed data (38, 42, 48) as output data.

2. The method according to claim 1, wherein the pipeline module (52) includes a data preprocessing module (36) configured for executing a preprocessing step that has an a priori known processing time and a preprocessing delay module (64), and the method comprises:
- feeding the input data (32) to the data preprocessing module (36) and the UID to the preprocessing delay module (64);
- delaying outputting the UID by the preprocessing delay module (64) for a delay time that corresponds to the a priori known processing time,
- wherein, in response to receiving the UID, the preprocessing delay module (64) blocks transmission of further input data (32) to the data preprocessing module (36) for as long as the UID is not output from the preprocessing delay module (64),
- wherein, in response to receiving the input data (32), the data preprocessing module (36) executes a preprocessing step to generate preprocessed data (38),
- wherein the UID and the preprocessed data (38) are output as the UID and the input data for the processing delay module (54) and the processing module (40, 44), respectively.

3. The method according to claim 1 or 2, wherein the pipeline module (52) includes a finalization module (46) configured for executing a finalization step that has an a priori known processing time and a finalization delay module (56), and the method comprises:
- feeding the output (42) of the data processing module (40, 44) to the finalization module (46) and the UID output from the processing delay module (54) to the finalization delay module (56);
- delaying outputting the UID by the finalization delay module (56) for a delay time that corresponds to the a priori known processing time,
- wherein, in response to receiving the UID, the finalization delay module (56) blocks the receipt of further data from the data processing module (40, 44) for as long as the UID is not output from the finalization delay module (46),
- wherein, in response to receiving the output from the data processing module (40, 44), the finalization module (46) executes a finalization step to generate finalized data (48),
- wherein the UID and the finalized data (48) are output as a final output of the pipeline module (52).

4. The method according to any of the preceding claims, wherein the data processing involves signing an unsigned message (32) with a post-quantum cryptographic signing method, where at least one step of the signing method takes an a priori indeterminable amount of processing time and includes a hashing part that executes a single iteration of hashing on the unsigned message as the performance part, wherein the input data is the unsigned message (32), wherein the pipeline module is a cryptographic pipeline module (52) that includes a hashing module (40) as the processing module and a hashing delay module (54) as the processing delay module.

5. The method according to any of the claims 2 to 4, wherein the cryptographic pipeline module (52) includes the preprocessing module (36).

6. The method according to any of the claims 3 to 5, wherein the cryptographic pipeline module (52) includes the finalization module (46) configured for executing a finalization step that has an a priori known processing time and a finalization delay module (56).

7. The method according to any of the preceding claims, wherein the cryptographic pipeline module (52) is partially or fully hardware-implemented as a CPU extension or hardware accelerator module that is connectable to a general purpose computer.

8. The method according to claim 7, wherein the data processing module (36, 40, 44) and the processing delay module (54, 64), and/or the finalization module (46) and the finalization delay module (56) are fully hardware-implemented.

9. A pipeline module (52) that is configured as a CPU extension or a hardware acceleration module that is connectable to a general purpose computer, wherein the pipeline module (52) is configured to partially or fully perform the method according to any of the preceding claims.

10. A general purpose computer comprising a CPU, a non-volatile data storage that is operatively coupled to the CPU and that is capable of storing instructions for the CPU, a volatile memory that is operatively coupled to the CPU for random access, and a pipeline module (52) according to claim 9 that is operatively coupled at least to the CPU.

11. A communication module (14, 18), preferably for an aerial vehicle (12), comprising a pipeline module (52) according to claim 9 and/or a general purpose computer according to claim 10, the communication module (14, 18) further comprising a transmitter and/or a transceiver that is operatively coupled to the pipeline module (52) or the general purpose computer such that an unsigned message (32) passes through the pipeline module (52) for signing and the signed message (50) is transmitted by the transmitter or transceiver.

12. An aerial vehicle (12) or a ground station (16) having a communication module (14, 18) according to claim 11.

13. A system (10) comprising at least one aerial vehicle (12), a server (20) and a database (22), wherein the aerial vehicle (12) and the server (20) are configured to communicate with each other via signed messages (50) by means of a communication module (14, 18) according to claim 11, wherein the server (20) has stored thereon a whitelist of valid signatures, wherein the server (20) is configured to accept signed messages (50) whose signature is part of the whitelist, wherein the server (20) is configured to reject unsigned messages (32) and/or signed messages (50) whose signature is not on the whitelist or on a blacklist.

14. A non-volatile computer readable data carrier or a data carrier signal comprising instructions, which, when executed by a general purpose computer cause it to carry out the method according to any of the claims 1 to 6.

15. A non-volatile computer readable data carrier or data carrier signal comprising instructions which, when synthesized into a field programmable gate array, cause the field programmable gate array to function as a pipeline module (52) according to claim 9.
